# EUROPEAN PATENT SPECIFICATION

(11) **EP 2 480 636 B1**
(45) Date of publication and mention of the grant of the patent: **12.04.2017**
(21) Application number: 10817869.0
(22) Date of filing: 17.09.2010
(51) Int. Cl.: C10G 17/02, B01J 31/04, B01J 31/26

(54) **IMPROVED METHOD FOR REMOVING METALS AND AMINES FROM CRUDE OIL**
VERBESSERTER VERFAHREN ZUR ENTFERNUNG VON METALLEN UND AMINEN AUS ROHÖL
PROCÉDÉ PERFECTIONNÉ POUR ÉLIMINER DES MÉTAUX ET DES AMINES À PARTIR D'HUILE BRUTE

(30) Priority: 21.09.2009 US 563583
(43) Date of publication of application: 01.08.2012
(73) Proprietor: Nalco Company, Naperville, IL 60563-1198 (US)
(72) Inventor: GARCIA, Juan M. III, Sugar Land Texas 77478 (US); LORDO, Samuel A., Katy Texas 77450 (US); BRADEN, Micahel L., Sugar Land Texas 77479 (US)
(74) Representative: HGF Limited
(86) International application number: PCT/US2010/049211
(87) International publication number: WO 2011/035085

(56) References cited:
- US-A- 4 439 345
- US-A- 4 789 463
- US-A- 4 888 108
- US-A1- 2004 045 875
- US-B2- 7 497 943

## Description

### TECHNICAL FIELD

This invention relates to a process for the removal of metals, particularly calcium, from petroleum crudes having unacceptably high levels of such metals in refinery desalting processes where certain hydroxycarboxylic acids are added to the crude oil rather than to wash water.

### BACKGROUND OF THE INVENTION

A few, but increasingly important, petroleum crude feedstocks contain levels of metals such as iron and calcium which render them difficult, if not impossible, to process using conventional refining techniques. For example, calcium contaminants causing particular problems can take the form of non-porphyrin, organometallically-bound compounds. One class of these calcium-containing compounds include calcium naphthenates and their homologous series. These organo-calcium compounds are not separated from the feedstock by normal desalting processes, and in a conventional refining technique they can cause coker furnace fouling, drive residual fuel off specification for metals and result in the very rapid deactivation of hydroprocessing catalysts. One example of feedstocks demonstrating objectionably high levels of calcium compounds are West African Doba crudes.

The use of hydroxycarboxylic acids to aid in the removal of metals including calcium and iron from crude oil in refinery desalting processes is disclosed in U.S. Patents 4,778,589 and 4,789,463, respectively.

A method of removing metals from crude oil in refinery desalting processes, in which a variety of acids, including C₂-C₄ hydroxycarboxylic acid are added to wash water prior to contacting the wash water with crude oil is disclosed in U.S. Patent 7,497,943.

A method of removing iron from crude oil in refinery desalting processes where various chelants are added to the crude oil prior to addition of wash water is disclosed in U.S. Patent 5,080,779.

### SUMMARY OF THE INVENTION

We have unexpectedly discovered that addition of hydroxycarboxylic acids including lactic acid and malic acid and wash water separately to crude oil in conventional crude oil desalting operations results in enhanced removal of amines and bound and unbound metal contaminants, particularly calcium, from the crude oil.

Accordingly, in an embodiment, this invention is a method of removing metals and amines from crude oil comprising adding an effective metal removing amount of one or more hydroxycarboxylic acids selected from lactic acid and malic acid and salts thereof to said crude oil; adding wash water to said crude oil; mixing said crude oil, acid and wash water to form an emulsion; and resolving said emulsion into an aqueous phase and crude oil having a reduced metals content.

### DETAILED DESCRIPTION OF THE INVENTION

In refinery crude oil desalting operations, a water-in-oil (w/o) emulsion is intentionally formed by adding water, commonly referred to as "wash water" to the crude oil with the wash water being admitted on the order of 3-10 volume percent based on the crude oil. The wash water is added to the crude and mixed intimately to transfer impurities such as chlorides in the crude to the water phase. The w/o emulsion is then pumped into the desalter unit where separation of the phases occurs due to coalescence of the small water droplets into progressively larger droplets and eventual gravity separation of the oil and underlying water phase.

Desalters are ordinarily provided with electrodes to impart an electrical field in the desalter. This serves to polarize the dispersed water molecules. The so-formed dipole molecules exert an attractive force between oppositely charged poles with the increased attractive force increasing the speed of water droplet coalescence by from ten to one hundred fold. The water droplets also move quickly in the electrical field, thus promoting random collisions that further enhance coalescence.

Also, the desalters are generally provided with heat imparting means and pressure control means to respectively control temperature and pressure within the vessels. Typically, desalter temperatures are maintained at 93-149°C (200-300°F). Heat lowers the viscosity of the continuous phase (i.e., oil) therefore speeding the settlement of the coalesced water droplets. It also increases the ability of bulk oil to dissolve certain organic emulsion stabilizers that may have been added or are naturally occurring in the crude.

Desalter pressure is kept high enough to prevent crude oil or water vaporization. Vaporization causes water carry over into the crude oil leaving the desalter. Desalter pressure at operating temperatures should generally be 1.4 bar (20 psi) above the crude oil or water vapor pressure, whichever is lower.

Upon separation of the phases from the w/o emulsion, the crude is commonly drawn off the top of the desalter and sent to the fractionator tower in crude units or other refinery processes. The water phase containing water-soluble metal salt compounds and sediment is discharged as effluent.

This invention is an improved refinery desalting operation comprising (i) providing crude oil; (ii) adding wash water to the crude oil and mixing to form and emulsion; and (iii) resolving the emulsion to provide an aqueous phase and crude oil having a reduced metal and amine content in which the improvement comprises adding an effective metal removing amount of one or more hydroxycarboxylic acids selected from malic acid and lactic acid and salts thereof to the crude oil separately from the wash water. Salts of the hydroxycarboxylic acids include, for example, alkali metal salts such as sodium and potassium salts and ammonium salts. "Separately from the wash water" means a separate addition point which is upstream of the wash water addition.

"Crude oil" means any hydrocarbon feedstock used in refinery operations including crude petroleum, atmospheric or vacuum residua, solvent deasphalted oils derived from these crudes and residua, shale oil, liquefied coal, beneficiated tar sand, and the like and blends thereof. The crude oil may also be treated with one or more processing aids including solvents, demulsifiers, corrosion inhibitors, and the like. In embodiment, the crude oil is petroleum crude. In an embodiment, the petroleum crude is Doba crude or a crude oil slate comprising Doba crude.

Metals suitable for removal using the process of this invention include, but are not limited to calcium, iron, zinc, silicon, nickel, sodium, potassium, vanadium, and the like and mixtures thereof. In an embodiment, the metals include iron and calcium. In an embodiment, the metal is calcium in its bound and unbound forms.

Amines suitable for removal using the process of this invention include, but are not limited to, monoethanolamine, diethanolamine, triethanolamine, N-methylethanolamine, N,N-dimethylethanolamine, morpholine, N-methyl morpholine, ethylenediamine, methoxypropylamine, N-ethyl morpholine, N-methyl ethanolamine, N-methyl diethanolamine, and the like and mixtures thereof.

The malic and/or lactic acid may be added as an aqueous solution. In an embodiment, the aqueous solution comprises 40 to 70 weight percent of the acids.

The effective amount of malic and/or lactic acid is the amount of acid required to achieve the desired amount of metal or amine removal from the crude oil and can be determined by one of skill in the art taking into account the characteristics of the acids, the crude oil being treated and any additional process parameters.

In an embodiment, the amount of acid added to the crude oil is an amount sufficient to result in a pH of 3 to 6 in the separated aqueous solution.

In general, 1 to 2,000 ppm of the hydroxycarboxylic acids are added to the crude oil. In an embodiment, 10 to 500 ppm of the hydroxycarboxylic acids are added to the crude oil.

In an embodiment, the hydroxycarboxylic acid is malic acid.

The hydroxycarboxylic acids may be used in combination with one or more adjuvants employed in refinery desalting processes including corrosion inhibitors, demulsifiers, pH adjusters, metal complexing agents, scale inhibitors, hydrocarbon solvents, and the like. The adjuvants may be independently added to the crude oil, to the wash water or formulated with the acid solution. For example, oil soluble adjuvants such as demulsifiers and corrosion inhibitors may be added directly to the crude oil while water soluble adjuvants may be formulated with the acids or added to the wash water.

In an embodiment, one or more demulsifiers are added to the crude oil or the wash water.

In an embodiment, one or more corrosion inhibitors are added to the crude oil or the wash water.

In an embodiment, one or more corrosion inhibitors are added to the wash water.

In an embodiment, the hydroxycarboxylic acids are added to the crude oil upstream of the corrosion inhibitor-containing wash water.

In an embodiment, the hydroxycarboxylic acids are added to the crude oil downstream of the corrosion inhibitor-containing wash water.

In an embodiment, one or more metal complexing agents, not including malic acid and lactic acid, to the crude oil or the wash water.

Metal complexing agents include a broad class of chemicals that coordinate or complex metal ions. Representative metal complexing agents include, but are not limited to ethylenediaminetetra acetic acid (EDTA), glycolic acid, gluconic acid, thioglycolic acid, tartaric acid, mandelic acid, citric acid, acetic acid, oxalic acid, nitrolotriacetic acid (NTA), ethylenediamine (EDA), methanesulfonic acid, malonic acid, succinic acid, maleic acid, dithiocarbamates and polymeric dithiocarbamates, and the like and salts thereof.

In a representative refinery application, crude oil containing 70 ppm calcium is processed in a conventional desalting operation which comprises a preheat train which includes preheat exchangers, a mix valve downstream of the preheat train and an electrostatic desalter. Upwards of 23848 m³/day (150,000 bbl/day) of crude oil containing 20% (4770 m³ or 30,000 bbls) of Doba crude oil are processed. Wash water treated with a corrosion inhibitor is added to the crude oil stream at a rate of 5% (1192 m³/day or 7,500 bbl/day). A 50% aqueous solution of hydroxycarboxylic acid is added to the crude charge at a dosage rate of 7.6 to 11.4 m³/day (2,000 to 3500 gal/day) upstream of wash water. The crude oil emulsion formed by the mix valve is resolved by electrostatic coalescence in the desalter to effect removal of up to 95% of the calcium from the crude oil.

The foregoing may be better understood by reference to the following Example, which is presented for purposes of illustration and are not intended to limit the scope of this invention.

### Example 1 (not according to the invention)

A 50 weight percent solution of crude oil in toluene is heated for 20 minutes at 82°C (180°F) and the heated crude oil sample is then mixed with a 10 weight percent aqueous solution of hydroxycarboxylic acid. The mixture is heated and shaken for 30 minutes. At the end of the extraction cycle, the samples are immediately heated for a second, 10-minute heating cycle, after which, the phases are allowed to separate in a separatory funnel. The calcium and iron content of the recovered phases is determined by ICP analysis. The results are summarized in Table 1.

**Table 1**

| Treating agent | Blank | Hydroxycarboxylic acid, 1.54 molar equiv. | Hydroxycarboxylic acid, 2.47 molar equiv. |
|---|---|---|---|
| Calcium Removed | 8.3ppm | 94.3% | 93% |
| Iron Removed | 35 ppm | 70% | 70% |

While the present invention is described above in connection with representative or illustrative embodiments, these embodiments are not intended to be exhaustive or limiting of the invention.

## Claims

1. A method of removing metals and amines from crude oil comprising adding an effective metal removing amount of one or more hydroxycarboxylic acids selected from lactic acid and malic acid and salts thereof to said crude oil; separately adding wash water to said crude oil and mixing said crude oil, acid and wash water to form an emulsion; and resolving said emulsion into an aqueous phase and crude oil having a reduced metals and/or amines content, wherein said hydroxycarboxylic acids are added to the crude oil upstream of the wash water.

2. The method of claim 1 wherein the hydroxycarboxylic acid is malic acid or a salt thereof.

3. The method of claim 1 wherein the metal is calcium.

4. The method of claim 1 wherein the effective metal removing amount of hydroxycarboxylic acid is the amount of hydroxycarboxylic acid required to adjust the pH of the separated aqueous phase to a range of 3-6.

5. The method of claim 1 further comprising adding one or more demulsifiers to the crude oil or the wash water.

6. The method of claim 1 further comprising adding one or more corrosion inhibitors to the crude oil or the wash water.

7. The method of claim 1 further comprising adding one or more metal complexing agents, not including malic acid and lactic acid, to the crude oil or the wash water.

8. The method of claim 1 wherein one or more corrosion inhibitors are added to the wash water.

9. The method of claim 1 wherein said emulsion is resolved using electrostatic coalescence.

10. The method of claim 1 wherein the crude oil is petroleum crude.

11. The method of claim 10 wherein the petroleum crude comprises Doba crude.

12. The method of claim 1 wherein said method is a refinery desalting process.

## Patentansprüche

1. Verfahren zur Entfernung von Metallen und Aminen aus Rohöl, umfassend Hinzugeben einer wirksamen, metallentfernenden Menge von einer oder mehreren Hydroxycarbonsäuren, ausgewählt aus Milchsäure und Äpfelsäure und Salzen davon, zu dem Rohöl; separates Hinzugeben von Waschwasser zu dem Rohöl und Mischen des Rohöls, der Säure und des Waschwassers zum Bilden einer Emulsion; und Auflösen der Emulsion in einer wässrigen Phase und wobei Rohöl einen reduzierten Metall- und/oder Amingehalt aufweist, wobei die Hydroxycarbonsäuren dem Rohöl vor dem Waschwasser hinzugegeben werden.

2. Verfahren nach Anspruch 1, wobei die Hydroxycarbonsäure Äpfelsäure oder ein Salz davon ist.

3. Verfahren nach Anspruch 1, wobei das Metall Calcium ist.

4. Verfahren nach Anspruch 1, wobei die wirksame, metallentfernende Menge von Hydroxycarbonsäure die Menge von Hydroxycarbonsäure ist, die zum Einstellen des pH-Werts der abgetrennten wässrigen Phase auf einen Bereich von 3-6 benötigt wird.

5. Verfahren nach Anspruch 1, ferner umfassend Hinzugeben eines oder mehrerer Demulgatoren zu dem Rohöl oder dem Waschwasser.

6. Verfahren nach Anspruch 1, ferner umfassend Hinzugeben eines oder mehrerer Korrosionshemmer zu dem Rohöl oder dem Waschwasser.

7. Verfahren nach Anspruch 1, ferner umfassend Hinzugeben eines oder mehrerer Metallkomplexbildner, die Äpfelsäure und Milchsäure nicht umfassen, zu dem Rohöl oder dem Waschwasser.

8. Verfahren nach Anspruch 1, wobei ein oder mehrere Korrosionshemmer zu dem Waschwasser hinzugegeben werden.

9. Verfahren nach Anspruch 1, wobei die Emulsion unter Verwendung von elektrostatischer Koaleszenz aufgelöst wird.

10. Verfahren nach Anspruch 1, wobei das Rohöl Roherdöl ist.

11. Verfahren nach Anspruch 10, wobei das Roherdöl Doha-Rohöl umfasst.

12. Verfahren nach Anspruch 1, wobei das Verfahren ein Raffinerie-Entsalzungsverfahren ist.

## Revendications

1. Procédé permettant d'éliminer les métaux et les amines du brut, comprenant l'addition audit brut, d'une quantité efficace, pour l'élimination des métaux, d'un ou plusieurs acides hydroxycarboxyliques choisis parmi l'acide lactique et l'acide malique et des sels de ceux-ci ; l'addition séparée d'eau de lavage audit brut et le mélange dudit brut, dudit acide et de ladite eau de lavage pour former une émulsion ; et la résolution de ladite émulsion en une phase aqueuse et en brut présentant une teneur réduite en métaux et/ou en amines, où lesdits acides hydroxycarboxyliques sont ajoutés au brut en amont de l'eau de lavage.

2. Procédé selon la revendication 1, où l'acide hydroxycarboxylique est l'acide malique ou un sel de celui-ci.

3. Procédé selon la revendication 1, où le métal est le calcium.

4. Procédé selon la revendication 1, où la quantité efficace d'acide hydroxycarboxylique pour l'élimination des métaux est la quantité d'acide hydroxycarboxylique requise pour régler le pH de la phase aqueuse séparée dans une fourchette de 3 à 6.

5. Procédé selon la revendication 1, comprenant en outre l'addition d'un ou plusieurs démulsifiants au brut ou à l'eau de lavage.

6. Procédé selon la revendication 1, comprenant en outre l'addition d'un ou plusieurs inhibiteurs de corrosion au brut ou à l'eau de lavage.

7. Procédé selon la revendication 1, comprenant en outre l'addition d'un ou plusieurs agents complexants des métaux, à l'exclusion de l'acide malique et de l'acide lactique, au brut ou à l'eau de lavage.

8. Procédé selon la revendication 1, où un ou plusieurs inhibiteurs de corrosion sont ajoutés à l'eau de lavage.

9. Procédé selon la revendication 1, où ladite émulsion est résolue par coalescence électrostatique.

10. Procédé selon la revendication 1, où le brut est du pétrole brut.

11. Procédé selon la revendication 10, où le pétrole brut comprend du brut de Doba.

12. Procédé selon la revendication 1, où ledit procédé consiste en un processus de dessalement pour raffinerie.
